# EUROPEAN PATENT APPLICATION

(11) **EP 4 832 018 A1**
(43) Date of publication of application: **28.10.2026**
(21) Application number: 24907305.7
(22) Date of filing: 12.12.2024
(51) Int. Cl.: H01B 1/06

(54) **SOLID ELECTROLYTE, PRODUCTION METHOD FOR SOLID ELECTROLYTE, AND BATTERY**

(30) Priority: 21.12.2023 WO PCT/JP2023/045959
(71) Applicant: NGK Corporation, Nagoya-shi, Aichi 467-8530 (JP)
(72) Inventor: YAGI, En, Nagoya-shi, Aichi 467-8530 (JP); TAKAHASHI, Haruto, Nagoya-shi, Aichi 467-8530 (JP); YOSHIDA, Toshihiro, Nagoya-shi, Aichi 467-8530 (JP)
(74) Representative: Mewburn Ellis LLP
(86) International application number: PCT/JP2024/044035
(87) International publication number: WO 2025/134920

(57) **Abstract**

A solid electrolyte contains a first element group of one or more alkali-metallic elements selected from the group consisting of Li, Na, and K, a second element group of one or more elements serving as trivalent cations selected from metallic elements and metalloid elements, a third element group of one or more halogen elements selected from the group consisting of F, Cl, Br, and I, and a hydroxyl group.

## Description

### TECHNICAL FIELD

The present invention relates to a solid electrolyte and a battery.

### CROSS-REFERENCE TO RELATED APPLICATIONS

This application claims priority benefit of International Application No. PCT/JP2023/045959 filed on December 21, 2023, the entire disclosure of which is incorporated herein by reference.

### BACKGROUND ART

In recent years, with the development of portable equipment such as personal computers and mobile phones, demand for batteries serving as power sources of such portable equipment is considerably increasing. The batteries used for such purposes conventionally use, as media for transporting ions, organic electrolyte solutions in which electrolytes dissolve in inflammable organic solvents. Such batteries are required to have a structure for ensuring the safety of organic electrolytic solutions, which results in an increase in production cost.

In order to resolve the concerns, the development of all solid-state batteries using solid electrolytes that are incombustible materials, instead of organic electrolyte solutions, is advancing in order to ensure intrinsic safety. Among the solid electrolytes, sulfide-based ones are known. However, sulfide-based solid electrolytes produce hydrogen sulfide gases when reacting with moisture. Meanwhile, the development of oxide-based solid electrolytes that do not produce gases such as hydrogen sulfide is also well underway, but materials for the oxide-based solid electrolytes have lower lithium ion conductivity than sulfides, making it difficult to improve battery output (i.e., draw a large current).

R. Miyazaki and H. Maekawa, "Li+-Ion Conduction of Li3AlF6 Mechanically Milled with LiCl", ECS Electrochemistry Letters, 2012, volume 1, number 6, pp. A87-A89 (Document 1) have proposed a solid electrolyte that has achieved an improvement in lithium ion conductivity by subjecting Li₃AlF₆ and LiCl to a mechanical milling process. International Publication WO2021/261558 (Document 2) discloses a solid electrolyte expressed by a composition formula of Li₂ZrOHCl₅.

There is constant demand for improvements in the ion conductivity of solid electrolytes, and there is a need to propose new solid electrolytes with high ion conductivity.

### SUMMARY OF THE INVENTION

The present invention is intended for a solid electrolyte, and it is a principal object of the present invention to provide a solid electrolyte with high ion conductivity.

Aspect 1 of the present invention is a solid electrolyte that includes a first element group of one or more alkali-metal elements selected from a group consisting of Li, Na, and K, a second element group of one or more elements serving as trivalent cations selected from metallic elements and metalloid elements, a third element group of one or more halogen elements selected from a group consisting of F, Cl, Br, and I, and a hydroxyl group.

According to the present invention, it is possible to provide a solid electrolyte e with high ion conductivity.

Aspect 2 of the present invention is the solid electrolyte according to Aspect 1, in which the second element group includes Al or Ga.

Aspect 3 of the present invention is the solid electrolyte according to Aspect 1 (or according to Aspect 1 or 2), in which among the metallic elements and the metalloid elements excluding alkali-metal elements, the elements included in the second element group constitute 50 mol% or more.

Aspect 4 of the present invention is the solid electrolyte according to Aspect 2, in which the second element group includes Al.

Aspect 5 of the present invention is the solid electrolyte according to Aspect 1 (or according to any one of Aspects 1 to 4), in which the third element group includes F or Cl.

Aspect 6 of the present invention is the solid electrolyte according to Aspect 1 (or according to any one of Aspects 1 to 5) that is expressed by a composition formula of MαₐMβ_{b}X_{c}(OH)_{d}, where Mα represents the first element group, Mβ represents the second element group, and X represents the third element group, in which a + 3 × b = c + d, 2.7 < a < 3.3, 0 < b < 1, 0 < c < 6, and 0 < d < 6 are satisfied.

Aspect 7 of the present invention is the solid electrolyte according to Aspect 1 (or according to any one of Aspects 1 to 6), in which a diffraction pattern obtained in measurement by an X-ray diffractometer using a CuKα ray has a peak in each of ranges of 2θ from 21° to 24°, from 32° to 34°, and from 35.5° to 37.5°.

Aspect 8 of the present invention is the solid electrolyte according to Aspect 4, in which a diffraction pattern obtained in measurement by an X-ray diffractometer using a CuKα ray does not have a peak in a range of 2θ from 24° to 26°.

Aspect 9 of the present invention is the solid electrolyte according to Aspect 4 (or according to Aspect 4 or 8), in which a peak appears in a Raman spectrum in a range of higher than or equal to 470 cm⁻¹ and lower than or equal to 570 cm⁻¹ and in a range of higher than or equal to 720 cm⁻¹ and lower than or equal to 820 cm⁻¹.

Aspect 10 of the present invention is the solid electrolyte according to Aspect 4 (or according to Aspect 4, 8, or 9), in which 60 mol% or more of Al has a coordination number of 4.

The present invention is also intended for a battery.

Aspect 11 of the present invention is a battery that includes a positive electrode, a negative electrode, and a solid electrolyte layer provided between the positive electrode and the negative electrode. At least one of the positive electrode, the negative electrode, or the solid electrolyte layer includes the solid electrolyte according to any one of Aspects 1 to 10.

The present invention is also intended for a method of producing a solid electrolyte.

Aspect 12 of the present invention is a method of producing a solid electrolyte. The method includes a) preparing a first material that is a compound of an element group of one or more elements serving as trivalent cations selected from metallic elements and metalloid elements with an element group of one or more halogen elements selected from a group consisting of F, Cl, Br, and I, b) preparing a second material that is a hydroxide of an element group of one or more alkali-metal elements selected from a group consisting of Li, Na, and K, c) subjecting a mixture that contains the first material and the second material to a mechanochemical process, and d) obtaining a solid electrolyte by heating the mixture that has undergone the mechanochemical process at a temperature of higher than or equal to 40°C for a period of time longer than or equal to 30 minutes and shorter than or equal to 24 hours.

Aspect 13 of the present invention is the method of producing a solid electrolyte according to Aspect 12 further including, before the operation c), d) preparing a third material that is a compound of an element group of one or more alkali-metal elements selected from a group consisting of Li, Na, and K with an element group of one or more halogen elements selected from a group consisting of F, Cl, Br, and I, and in the operation c), a mixture that contains the first material, the second material, and the third material is subjected to a mechanochemical process.

Aspect 14 of the present invention is the method of producing a solid electrolyte according to Aspect 12 or 13, in which in the operation d), the mixture that has undergone the mechanochemical process is pressurized to a pressure of higher than or equal to 1 MPa and lower than or equal to 500 MPa.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal sectional view of an all-solid-state secondary battery.
Fig. 2 is a flowchart showing the production of a solid electrolyte.
Fig. 3 is a diagram showing press molding of the solid electrolyte.
Fig. 4 is a diagram showing XRD patterns for Experimental Examples 1, 2, and 5.
Fig. 5 is a diagram showing results of infrared spectrometric measurements in Experimental Examples 1 and 2.
Fig. 6 is a diagram showing measurement of a potential window.
Fig. 7 is a diagram showing a result of cyclic voltammetry measurement.
Fig. 8 is a diagram showing a Raman spectrum.
Fig. 9 is a diagram showing an NMR spectrum.
Fig. 10 is a diagram showing a discharge curve for an all-solid-state battery (1).
Fig. 11 is a diagram showing a discharge curve for an all-solid-state battery (2).

### DESCRIPTION OF EMBODIMENTS

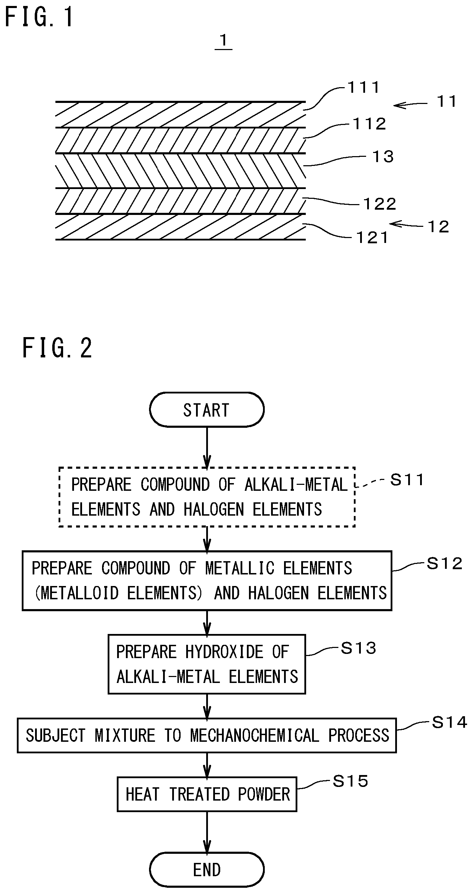

Fig. 1 is a longitudinal section view showing an all solid-state secondary battery 1. The all solid-state secondary battery 1 includes a positive electrode 11, a solid electrolyte layer 13, and a negative electrode 12 in the order from above in Fig. 1. That is, the solid electrolyte layer 13 is located between the positive electrode 11 and the negative electrode 12. The solid electrolyte layer 13 serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

Preferably, the positive active material of the positive electrode layer 112 contains a lithium complex oxide. A preferable positive active material is a lithium complex oxide having a layered rock-salt structure and may, for example, be NCM (Li(Ni, Co, Mn)O₂). The positive active material may also be other lithium complex oxides and may, for example, be NCA (Li(Ni, Co, Al)O₂), or LCO (LiCoO₂) that has a layered rock-salt structure, LNMO (LiNi_{0.5}Mn_{1.5}O₄) that has a spinel structure, or LFP (LiFePO₄) that has an olivine structure. In addition to the positive active material, the positive electrode layer 112 further includes a solid electrolyte described later and an electron conductive additive (e.g., carbon black). The positive electrode layer 112 according to the present embodiment is obtained by integrating these substances by pressurization or heating.

Examples of the negative active material of the negative electrode layer 122 include compounds such as LTO (Li₄Ti₅O₁₂), NTO (Nb₂TiO₇), TiO₂ (titanium oxide), graphite, and SiO (silicon monoxide). In addition to the negative active material, the negative electrode layer 122 includes the solid electrolyte described later. The negative electrode layer 122 may further include an electron conductive additive (e.g., carbon black). The negative electrode layer 122 according to the present embodiment is obtained by integrating these substances by pressurization or heating.

The configurations and materials of the positive electrode 11 and the negative electrode 12 in the all solid-state secondary battery 1 are not limited to the examples described above, and various other configurations and materials are available.

The solid electrolyte layer 13 is formed of an ion conductive material serving as the solid electrolyte, or includes the solid electrolyte. The solid electrolyte contains a first element group of one or more alkali-metallic elements selected from the group consisting of Li (lithium), Na (sodium), and K (potassium); a second element group of one or more elements selected from metallic elements and metalloid elements excluding Li, Na, K, Zr (zirconium), and Mg (magnesium); a third element group of one or more halogen elements selected from the group consisting of F (fluorine), Cl (chlorine), Br (bromine), and I (iodine); and OH (a hydroxyl group). This enables the provision of a new solid electrolyte with high ion conductivity. Specifically, it is possible to achieve ion conductivity of higher than or equal to 1.0 × 10⁻⁵ S/cm at ambient temperature. The solid electrolyte also has a wide potential window and excellent humidity resistance.

Preferably, the second element group includes one or more elements serving as trivalent cations selected from metallic elements and metalloid elements. More preferably, the second element group includes Al. Preferably, among the metallic elements and the metalloid elements excluding alkali-metallic elements in the solid electrolyte, the elements included in the second element group constitute 50 mol% or more.

In the specification of the present invention, the metalloid elements are boron (B), silicon (Si), germanium (Ge), arsenic (As), antimony (Sb), and tellurium (Te). The metallic elements are elements included in Groups 1 to 12 of the periodic table excluding hydrogen, and the metalloids described above and elements included in Groups 13 to 16 of the periodic table excluding C, N, P, O, S, Se. That is, the metallic elements refer to a group of elements serving as cations in the case of forming a halogen compound and an inorganic compound.

Preferably, a composition formula is expressed by MαₐMβ_{b}X_{c} (OH)_{d}, where Mα represents the first element group, Mβ represents the second element group, and X represents the third element group, in which a + n × b = c + d, 2.7 < a < 3.3, 0 < b < 1, 0 < c < 6, and 0 < d < 6 are satisfied, where n represents the valence of Mβ. More preferably, 2.7 < a < 3.3, 0.4 < b < 0.8, 2.0 < c < 2.8, and 1.5 < d < 3.3 are satisfied.

In the case where the second element group includes only elements serving as trivalent cations, and the solid electrolyte contains only the first element group, the second element group, the third element group, and the hydroxyl group, a + 3 × b = c + d, 2.7 < a < 3.3, 0 < b < 1, 0 < c < 6, and 0 < d < 6 are satisfied in the above-described composition formula of MαₐMβ_{b}X_{c}(OH)_{d}. More preferably, 2.7 < a < 3.3, 0.4 < b < 0.8, 2.0 < c < 2.8, and 1.5 < d < 3.3 are satisfied.

In one preferable example, the above-described first element group includes only Li. The above-described second element group preferably includes elements serving as trivalent cations. One preferable example of the elements serving as trivalent cations is Al (aluminum) or Ga (gallium). In one preferable example, the second element group includes only at least one of Al and Ga. The third element group preferably includes F or Cl. More preferably, the third element group includes only at least one of F and Cl.

Preferably, a diffraction pattern of the solid electrolyte obtained in measurement by an X-ray diffractometer using CuKα rays has a peak in each of ranges of 2θ from 21° to 24°, from 32° to 34°, and from 35.5° to 37.5°. More preferably, the second element group includes Al, and the above-described diffraction pattern has no peak in the range of 2θ from 24° to 26°. This means that AlF₃ is substantially not present.

In the case where the second element group includes Al, it is preferable that, in a Raman spectrum of the solid electrolyte, peaks appear in the range of higher than or equal to 470 cm⁻¹ and lower than or equal to 570 cm⁻¹ and in the range of higher than or equal to 720 cm⁻¹ and lower than or equal to 820 cm⁻¹. This Raman spectrum indicates that the solid electrolyte possesses a certain degree of structural uniformity, which is believed to be one of the factors contributing to high ion conductivity. It is also believed that tetracoordinate bonding of Al is one of the factors contributing to high ion conductivity. Thus, in the case where the second element group in the solid electrolyte includes Al, it is preferable that 60 mol% or more of Al has a coordination number of 4.

The above-described solid electrolyte is incombustible and chemically stable and does not produce hydrogen sulfide gases, and this enables providing the all solid-state secondary battery 1 with intrinsic safety. Moreover, the above-described solid electrolyte can be densified by press molding, instead of by sintering, and does not react with any active material during battery production.

One preferable example of the solid electrolyte contains a lithium element, an aluminum element, a chlorine element, a fluorine element, and a hydroxyl group. Another preferable example contains a lithium element, an aluminum element, a fluorine element, and a hydroxyl group. Yet another preferable example contains a lithium element, a gallium element, a fluorine element, and a hydroxyl group.

Fig. 2 is a flowchart showing the production of the solid electrolyte. In the production of the solid electrolyte, first, a compound of alkali-metallic elements and halogen elements is prepared (step S11). An element group of the alkali-metallic elements (i.e., one or more elements) includes one or more elements selected from the group consisting of Li, Na, and K. An element group of the halogen elements includes one or more elements selected from the group consisting of F, Cl, Br, and I. As one exemplary compound, at least one of LiF and LiCl is prepared in step S11. Note that step S11 may be omitted.

Then, a compound of an element group selected from metallic elements and metalloid elements with an element group of halogen elements is prepared (step S12). Note that the element group selected from metallic elements and metalloid elements is preferably elements serving as trivalent cations. This element group may be defined as an element group selected from metallic elements and metalloid elements excluding Li, Na, K, Zr, and Mg. The element group of halogen elements is one or more elements selected from the group consisting of F, Cl, Br, and I. As one exemplary compound, at least one of AlF₃ and GaF₃ is prepared in step S12.

Furthermore, a hydroxide of an element group of one or more alkali-metallic elements is prepared (step S13). The element group of alkali-metallic elements includes one or more elements selected from the group consisting of Li, Na, and K. As one exemplary compound, LiOH is prepared in step S13. Steps S11 to S13 may be performed in any order.

Then, the materials prepared in steps S11 to S13 (or steps S12 and S13 when step S11 is not performed) are mixed together, and a resultant mixture is subjected to a mechanochemical process (step S14). In the mechanochemical process, particles of the mixture become activated or react with each other. As a specific example, the mixture is subjected to a mechanical milling process using a planetary mill in step S14. In the mixing, only the materials prepared in steps S11 to S13 (or steps S12 and S13) may be mixed together, or other materials may be added to the prepared materials.

The mechanical milling process uses, for example, a planetary ball mill. The planetary ball mill is capable of generating very high impact energy because its stage with a pot being placed thereon revolves while the pot rotates on its axis. The mechanical milling process may also use other types of pulverizers. The above-described mechanical milling process yields powder (hereinafter, also referred to as the "treated powder") that serves as the base for the solid electrolyte used in the positive electrode layer 112, the negative electrode layer 122, or the solid electrolyte layer 13. In the present processing example, the mechanical milling process is performed at ordinary temperatures, but its conditions such as temperature may be appropriately changed.

Thereafter, by heating the mixture (treated powder) that has undergone the mechanochemical process at a temperature of higher than or equal to 40°C for a period of time longer than or equal to 30 minutes and shorter than or equal to 24 hours, the solid electrolyte is obtained (step S15). At this time, the treated powder may be pressurized to a pressure of higher than or equal to 1 MPa and lower than or equal to 500 MPa.

Next, experimental examples of the solid electrolyte are described. The experimental examples described below were conducted in a glove box with a dew point of less than or equal to -40°C or in a dry room.

### Experimental Example 1

Commercially available LiF (lithium fluoride) powder (LIH20XB supplied by Kojundo Chemical Lab. Co., Ltd.), commercially available LiCl powder (LIH09XB supplied by the above company), and commercially available AlF₃ (aluminum fluoride) powder (ALH17PB supplied by the above company) were prepared as raw materials. LiF, LiCl, and AlF₃ were weighed in a ratio of molar percentages of 25.0, 50.0, and 25.0, respectively, and pulverized and mixed together in a mortar. A resultant mixture was further subjected to a mechanical milling process using a planetary ball mill to obtain treated powder.

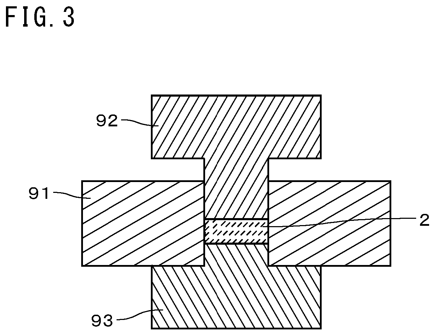

In the mechanical milling process, the treated powder was obtained by adding 100 ZrO₂ (zirconia) cobblestones having a diameter of 10 mm and 12g of mixed powder to a ZrO₂ pot (500 cc) of the planetary ball mill and subjecting them to mechanical milling at 400 rpm for 20 hours. Thereafter, as shown in Fig. 3, 200g of the treated powder was placed between an upper punch 92 and a lower punch 93, both made of SUS (stainless steel), in a PEEK resin sleeve 91 and was heated to 150°C while being pressurized at 150 MPa for one hour, so as to form a solid electrolyte 2 by press molding.

### Ion Conductivity Measurement

After the temperature was returned to ambient temperature with the solid electrolyte 2 placed between the upper and lower punches 92 and 93, an impedance measurement was conducted via lead wires connected to the upper and lower punches 92 and 93 to calculate ion conductivity. The impedance measurement was conducted at a voltage of 10 mV and a frequency of 0.1 Hz to 1 MHz. The ion conductivity was 1.6 × 10⁻⁷ S/cm (expressed as 1.6E-07 in Table 1; the same applies below).

### XRD Measurement

Powder of the solid electrolyte was obtained and treated by a diffractometer for X-ray diffraction (XRD) to acquire an X-ray diffraction pattern (hereinafter, also referred to the "XRD pattern"). An enclosed-tube type X-ray diffractometer (D8-ADVANCE manufactured by Bruker AXS Inc.) was used. The measurement was conducted using CuKα rays at 40 kV and 40 mA. The step width of the measurement was set to 0.02°.

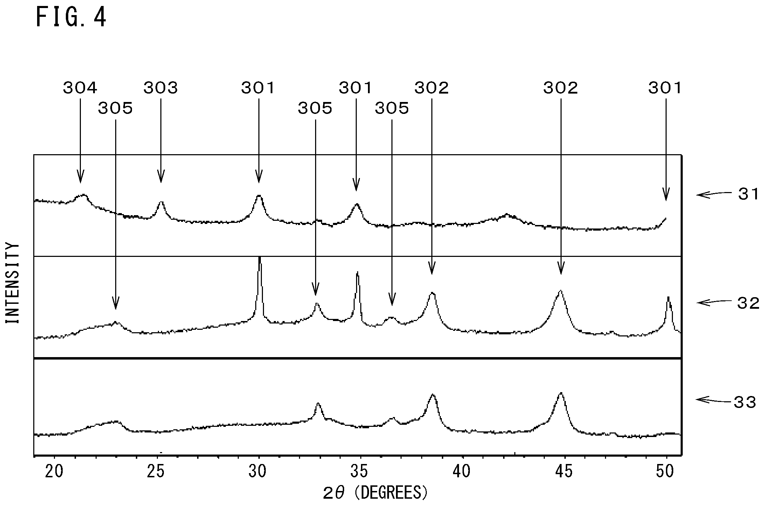

The upper section indicated by a reference sign 31 in Fig. 4 indicates an XRD pattern for Experimental Example 1. Peaks appearing at positions indicated by reference signs 301 in the ranges of 29° to 31°, 34° to 36°, and 49.5° to 50.5° corresponded to LiCl; a peak appearing at a position indicated by a reference sign 303 in the range of 24° to 26° corresponded to AlF₃; and a peak appearing at a position indicated by a reference sign 304 in the range of 20° to 23° corresponded to Li₃AlF₆.

### Infrared Spectrometry

For the solid electrolyte, an infrared spectrometric spectrum was acquired using an attenuated total reflectance (ATR) method. FT-IR VERTEX 70v (manufactured by Bruker Cooperation) was used as a measuring device, SiC was used as a light source, and DTGS (deuterated triglycine sulfate) was used as a detector. The resolving power was set to 4 cm⁻¹, the cumulative number of calculations was set to 256, and Platinum ATR (with single-reflection ATR, an incident angle of 45°, and use of a diamond prism) was used as an attachment device.

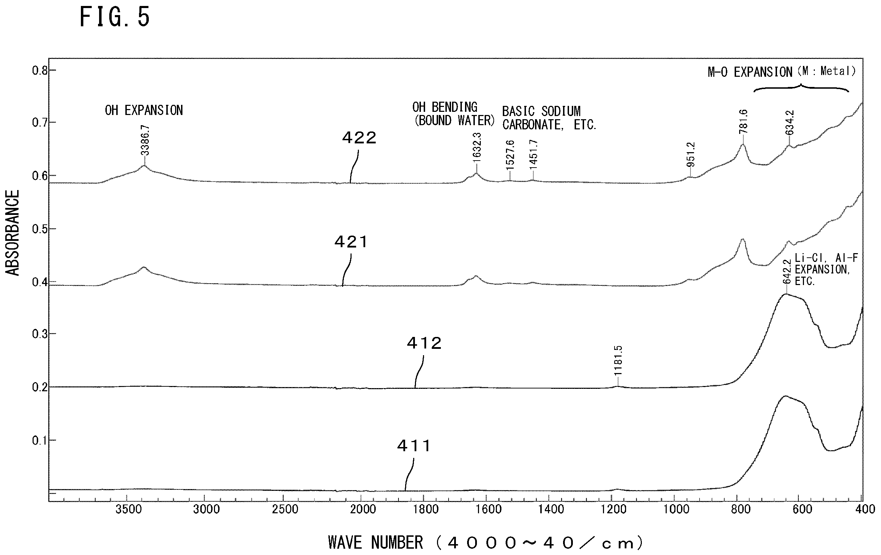

The curves indicated by reference signs 411 and 412 in Fig. 5 show the results of two measurements conducted on the solid electrolyte according to Experimental Example 1. The absorbance on the vertical axis indicates the value relative to a value obtained by single measurement, and the results of the two measurements are shown offset vertically.

### Experimental Example 2

As in Experimental Example 1, commercially available LiF powder, commercially available LiCl powder, and commercially available AlF₃ powder were prepared as raw materials. Furthermore, commercially available LiOH (lithium hydroxide) powder (442410 supplied by Sigma-Aldrich) was prepared. LiF, LiCl, AlF₃, and LiOH were weighed in a ratio of molar percentages of 12.5, 25.0, 12.5, and 50.0, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1.

The ion conductivity measured in the same manner as in Experimental Example 1 was 4.1 × 10⁻⁴ S/cm. In Experimental Example 2, an ion conductivity measurement was also conducted during heating, and therefore it was observed that the heating caused an increase in ion conductivity, and thereafter the ion conductivity only decreased to the value mentioned above when the temperature was returned to ambient temperature.

An XRD measurement was conducted in the same manner as in Experimental Example 1. The middle section indicated by a reference sign 32 in Fig. 4 shows an XRD pattern for Experimental Example 2. Peaks appearing at positions indicated by the reference signs 301 in the ranges of 29.5° to 30.5°, 34° to 35°, and 49.5° to 50.5° corresponded to LiCl, and peaks appearing at positions indicated by reference signs 302 in the ranges of 38° to 39° and 44° to 46°corresponded to LiF.

Infrared spectrometry was conducted under the same conditions as in Experimental Example 1. The curves indicated by reference signs 421 and 422 in Fig. 5 show the results of two measurements conducted on the solid electrolyte according to Experimental Example 2. In Fig. 5, the results of the two measurements are shown offset vertically. It is possible to confirm the presence of the OH group.

### Experimental Example 3

In Experimental Example 3, commercially available AlF₃ powder and commercially available LiOH powder were prepared as raw materials. AlF₃ and LiOH were weighed in a ratio of mole percentages of 20.0 and 80.0, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1.

The ion conductivity measured in the same manner as in Experimental Example 1 was 1.0 × 10⁻⁵ S/cm.

### Experimental Examples 4 to 8

In Experimental Examples 4 to 8, commercially available LiF powder, commercially available LiCl powder, commercially available AlF₃ powder, and commercially available LiOH powder were prepared as raw materials as in Experimental Example 2. In Experimental Example 4, LiF, LiCl, AlF₃, and LiOH were weighed in a ratio of molar percentages of 4.3, 8.7, 17.4, and 69.6, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 6.2 × 10⁻⁴ S/cm.

In Experimental Example 5, LiF, LiCl, AlF₃, and LiOH were weighed in a ratio of mole percentages of 7.7, 15.4, 15.4, and 61.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.0 × 10⁻³ S/cm.

An XRD measurement was conducted in the same manner as in Experimental Example 1. The lower section indicated by a reference sign 33 in Fig. 4 shows an XRD pattern for Experimental Example 3. Peaks appearing at the positions indicated by the reference signs 302 in the ranges of 38° to 39°and 44° to 46° corresponded to LiF.

In Experimental Example 6, LiF, LiCl, AlF₃, and LiOH were weighed in a ratio of molar percentages of 13.3, 20.0, 13.3, and 53.3, respectively (here, a total value may not become 100 due to rounding; the same also applied below) and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 2.1 × 10⁻⁴ S/cm.

In Experimental Example 7, LiF, LiCl, AlF₃, and LiOH were weighed in a ratio of molar percentages of 14.3, 14.3, 14.3, and 57.1, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 5.0 × 10⁻⁴ S/cm.

In Experimental Example 8, LiF, LiCl, AlF₃, and LiOH were weighed in a ratio of molar percentages of 15.4, 7.7, 15.4, and 61.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.2 × 10⁻⁴ S/cm.

### Experimental Example 9

In Experimental Example 9, commercially available GaF₃ (gallium fluoride (III)) (32112 supplied from Alfa Aesar (catalog name)) was prepared, instead of AlF₃ in Experimental Example 2. LiF, LiCl, GaF₃, and LiOH were weighed in a ratio of molar percentages of 12.5, 25.0, 12.5, and 50.0, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 7.1 × 10⁻⁵ S/cm.

### Experimental Example 10

In Experimental Example 10, commercially available ZrF₄ (zirconium fluoride (IV)) (232-018-1 supplied by Strem Chemicals) was prepared, instead of AlF₃ in Experimental Example 2. LiF, LiCl, ZrF₄, and LiOH were weighed in a ratio of molar percentages of 12.5, 25.0, 12.5, and 50.0, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 4.2 × 10⁻⁷ S/cm.

### Experimental Example 11

In Experimental Example 11, commercially available MgF₂ (magnesium fluoride) (MGH18XB supplied by Kojundo Chemical Lab. Co., Ltd.) was prepared, instead of AlF₃ in Experimental Example 2. LiF, LiCl, MgF₂, and LiOH were weighed in a ratio of molar percentages of 12.5, 25.0, 12.5, and 50.0, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.0 × 10⁻⁹ S/cm.

### Experimental Example 12

In Experimental Example 12, the same materials as in Experimental Example 2 were weighed in the same ratio of molar percentages as in Experimental Example 2 and pulverized and mixed together in a mortar. A resultant mixture was further subjected to a mechanical milling process using a planetary ball mill to obtain treated powder. Thereafter, as in Experimental Example 1, the treated powder was placed between the upper punch 92 and the lower punch 93 in the sleeve 91 and press-molded by pressurization at 150 MPa and at ambient temperature for 15 minutes as shown in Fig. 3. Subsequently, after depressurization, the treated powder was heat-treated at 150°C for one hour. After cooling, an impedance measurement was conducted via the conductors connected to the upper and lower punches 92 and 93 as in Experimental Example 1 to calculate ion conductivity. The ion conductivity was 5.3 × 10⁻⁵ S/cm.

### Experimental Example 13

In Experimental Example 13, the same materials as in Experimental Example 5 were weighed in the same ratio of molar percentages as in Experimental Example 5 and pulverized and mixed together in a mortar. The mixture was further subjected to a mechanical milling process using a planetary ball mill so as to obtain treated powder. Thereafter, the treated powder was press-molded without heating as in Experimental Example 12. Subsequently, after depressurization, the treated powder was heat-treated at 150°C for one hour. After cooling, an impedance measurement was conducted as in Experimental Example 1 to calculate ion conductivity. The ion conductivity was 1.3 × 10⁻⁴ S/cm.

### Experimental Example 14

In Experimental Example 14, commercially available LiCl powder, commercially available AlF₃ powder, and commercially available LiOH powder were prepared as raw materials. LiCl, AlF₃, and LiOH were weighed in a ratio of molar percentages of 16.7, 16.7, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.6 × 10⁻³ S/cm.

### Experimental Example 15

In Experimental Example 15, commercially available GaF₃ powder was prepared in addition to the raw materials used in Experimental Example 14, and LiCl, AlF₃, GaF₃, and LiOH were weighed in a ratio of molar percentages of 16.7, 13.3, 3.3, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.4 × 10⁻³ S/cm.

### Experimental Example 16

In Experimental Example 16, commercially available Al₂O₃ (aluminum oxide) powder (AKP-20 supplied by Sumitomo Chemical Co., Ltd.) was prepared in addition to the raw materials used in Experimental Example 14, and LiCl, AlF₃, Al₂O₃, and LiOH were weighed in a ratio of molar percentages of 16.7, 15.0, 1.7, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 7.9 × 10⁻⁴ S/cm.

### Experimental Example 17

In Experimental Example 17, commercially available B₂O₃ (boron oxide) powder (BBO08PB supplied by Kojundo Chemical Lab. Co., Ltd.) was prepared in addition to the raw materials used in Experimental Example 14, and LiCl, AlF₃, B₂O₃, and LiOH were weighed in a ratio of molar percentages of 16.7, 15.0, 1.7, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 5.0 × 10⁻⁴ S/cm.

### Experimental Example 18

In Experimental Example 18, commercially available ZrF₄ powder was prepared in addition to the raw materials used in Experimental Example 1, and LiF, LiCl, AlF₃, ZrF₄, and LiOH were weighed in a ratio of molar percentages of 7.7, 15.4, 13.8, 1.5, and 61.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 2.5 × 10⁻⁴ S/cm.

### Experimental Example 19

In Experimental Example 19, commercially available MgF₂ powder was prepared in addition to the raw materials used in Experimental Example 1, and LiF, LiCl, AlF₃, MgF₂, and LiOH were weighed in a ratio of molar percentages of 1.6, 16.4, 14.8, 1.6, and 65.6, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.1 × 10⁻⁴ S/cm.

### Experimental Example 20

In Experimental Example 20, commercially available Li₂SiF₆ (lithium hexafluosilicate) powder (M003-2-X2 supplied by Synquest Laboratories Inc.) was prepared in addition to the raw materials used in Experimental Example 1, and LiF, LiCl, AlF₃, Li₂SiF₆, and LiOH were weighed in a ratio of molar percentages of 4.8, 15.9, 14.3, 1.6, and 63.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.8 × 10⁻⁴ S/cm.

### Experimental Example 21

In Experimental Example 21, commercially available TiF₄ (titanium fluoride (IV)) powder (supplied by Alfa Aesar; no product name) was prepared in addition to the raw materials used in Experimental Example 1, and LiF, LiCl, AlF₃, TiF₄, and LiOH were weighed in a ratio of molar percentages of 7.7, 15.4, 13.8, 1.5, and 61.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 2.0 × 10⁻⁴ S/cm.

### Experimental Example 22

In Experimental Example 22, commercially available ZnF₂ (zinc fluoride) powder (ZNH14XB supplied by Kojundo Chemical Lab. Co., Ltd.) was prepared in addition to the raw materials used in Experimental Example 14, and LiCl, AlF₃, ZnF₂, and LiOH were weighed in a ratio of molar percentages of 19.4, 12.9, 3.2, and 64.5, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 1.8 × 10⁻⁴ S/cm.

### Experimental Example 23

In Experimental Example 23, commercially available LiBr (lithium bromide) powder (LIH04XB supplied by Kojundo Chemical Lab. Co., Ltd.) was prepared in addition to the raw materials used in Experimental Example 14, and LiCl, AlF₃, LiBr, and LiOH were weighed in a ratio of molar percentages of 12.5, 16.7, 4.2, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 5.3 × 10⁻⁴ S/cm.

### Experimental Example 24

In Experimental Example 24, commercially available LiBr powder was prepared in addition to the raw materials used in Experimental Example 3, and AlF₃, LiBr, and LiOH were weighed in a ratio of molar percentages of 16.7, 16.7, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 4.4 × 10⁻⁴ S/cm.

### Experimental Example 25

In Experimental Example 25, commercially available NaCl (sodium chloride) powder (793566 supplied by Sigma-Aldrich), commercially available AlF₃ powder, and commercially available NaOH (sodium hydroxide) powder (757527 supplied by Sigma-Aldrich) were prepared. NaCl, AlF₃, and NaOH were weighed in a ratio of molar percentages of 16.7, 16.7, and 66.7, respectively, and pulverized and mixed together in a mortar. A resultant mixture was further subjected to a mechanical milling process using a planetary ball mill to obtain treated powder. Thereafter, the solid electrolyte was formed by press molding under the same conditions as in Experimental Example 1. The ion conductivity measured in the same manner as in Experimental Example 1 was 7.0 × 10⁻⁵ S/cm.

Table 1 shows the mixture ratios of materials and the ion conductivity according to the experimental examples described above. In Table 1, an asterisk "*" is added to experimental example numbers that achieved relatively high ion conductivity.

**Table 1**

| Experimental Example Number | Materials | | | | | | Conductivity (S/cm) |
|---|---|---|---|---|---|---|---|
| | LiF (mol%) | LiCl (mol%) | AlF₃ (mol%) | Other Materials | Other Materials (mol%) | LiOH (mol%) | |
| 1 | 25.0 | 50.0 | 25.0 | - | 0 | 0 | 1.6E-07 |
| 2* | 12.5 | 25.0 | 12.5 | - | 0 | 50.0 | 4.1E-04 |
| 3* | 0 | 0 | 20.0 | - | 0 | 80.0 | 1.0E-05 |
| 4* | 4.3 | 8.7 | 17.4 | - | 0 | 69.6 | 6.2E-04 |
| 5* | 7.7 | 15.4 | 15.4 | - | 0 | 61.5 | 1.0E-03 |
| 6* | 13.3 | 20.0 | 13.3 | - | 0 | 53.3 | 2.1E-04 |
| 7* | 14.3 | 14.3 | 14.3 | - | 0 | 57.1 | 5.0E-04 |
| 8* | 15.4 | 7.7 | 15.4 | - | 0 | 61.5 | 1.2E-04 |
| 9* | 12.5 | 25.0 | 0 | GaF₃ | 12.5 | 50.0 | 7.1E-05 |
| 10 | 12.5 | 25.0 | 0 | ZrF₄ | 12.5 | 50.0 | 4.2E-07 |
| 11 | 12.5 | 25.0 | 0 | MgF₂ | 12.5 | 50.0 | 1.0E-09 |
| 12* | 12.5 | 25.0 | 12.5 | - | 0 | 50.0 | 5.3E-05 |
| 13* | 7.7 | 15.4 | 15.4 | - | 0 | 61.5 | 1.3E-04 |
| 14* | 0 | 16.7 | 16.7 | - | 0 | 66.7 | 1.6E-03 |
| 15* | 0 | 16.7 | 13.3 | GaF₃ | 3.3 | 66.7 | 1.4E-03 |
| 16* | 0 | 16.7 | 15.0 | Al₂O₃ | 1.7 | 66.7 | 7.9E-04 |
| 17* | 0 | 16.7 | 15.0 | B₂O₃ | 1.7 | 66.7 | 5.0E-04 |
| 18* | 7.7 | 15.4 | 13.8 | ZrF₄ | 1.5 | 61.5 | 2.5E-04 |
| 19* | 1.6 | 16.4 | 14.8 | MgF₂ | 1.6 | 65.6 | 1.1E-04 |
| 20* | 4.8 | 15.9 | 14.3 | Li₂SiF₆ | 1.6 | 63.5 | 1.8E-04 |
| 21* | 7.7 | 15.4 | 13.8 | TiF₄ | 1.5 | 61.5 | 2.0E-04 |
| 22* | 0 | 19.4 | 12.9 | ZnF₂ | 3.2 | 64.5 | 1.8E-04 |
| 23* | 0 | 12.5 | 16.7 | LiBr | 4.2 | 66.7 | 5.3E-04 |
| 24* | 0 | 0 | 16.7 | LiBr | 16.7 | 66.7 | 4.4E-04 |

| Experimental Example Number | Materials | | | | | | Conductivity (S/cm) |
|---|---|---|---|---|---|---|---|
| | NaF (mol%) | NaCl (mol%) | AlF₃ (mol%) | Other Materials | Other Materials (mol%) | NaOH (mol%) | |
| 25* | 0 | 16.7 | 16.7 | - | 0 | 66.7 | 7.0E-05 |

As shown in Table 1, Experimental Examples 2 to 9 and 12 to 25 achieved high ion conductivity that was higher than or equal to 1.0 × 10⁻⁵ S/cm at ambient temperature.

A comparison of Experimental Example 1 with Experimental Examples 2, and 4 to 8 shows that adding LiOH to the materials dramatically improved the ion conductivity. It is also found from the infrared spectrometry in Experimental Example 2 that the presence of the OH group contributes to the above improvement.

In Experimental Examples 2 and 5, metal fluoride (AlF₃) was included as a material, but the XRD patterns shown in Fig. 4 (the curves indicated by the reference signs 32 and 33) had no peaks originating from AlF₃ (no peak at 2θ of around 25° indicated by the reference sign 303). There were also no peaks originating from other compounds that contained Al (e.g., Li₃AlF₆). On the other hand, unspecified low-intensity peaks were observed in the ranges of 2θ from 21° to 24°, from 32° to 34°, and from 35.5° to 37.5°, indicated by reference signs 305. That is, the solid electrolyte described above was characterized in that the diffraction pattern obtained in measurement by an X-ray diffractometer using CuKα rays had a peak in each of ranges of 2θ from 21° to 24°, from 32° to 34°, and from 35.5° to 37.5°.

Although the detailed mechanism is not yet known, it is conceivable that the presence of Li, Al, OH (hydroxyl group), and halogen elements can contribute to high ion conductivity. A comparison between the curve for Experimental Example 1 indicated by the reference sign 31 in Fig. 4 and the curves for Experimental Examples 2 and 5 indicated by the reference signs 32 and 33 shows it is preferable that the diffraction pattern obtained in measurement by an X-ray diffractometer using CuKα rays has no peaks in the range of 2θ from 24° to 26° because the curves 32 and 33 show no peaks originating from AlF₃.

Moreover, the curve for Experimental Example 2 indicated by the reference sign 32 shows the peaks originating from LiCl, which are indicated by the reference signs 301, but the curve for Experimental Example 5 indicated by the reference sign 33 shows no peaks originating from LiCl. Since higher ion conductivity was achieved in Experimental Example 5, it becomes clear that it is more preferable not to have peaks originating from LiCl.

Note that, since relatively high ion conductivity was also achieved in Experimental Example 3, it is clear that lithium halide is not essential as a material.

When the solid electrolyte is expressed by a composition formula of LiₐAl_{b}X_{c}(OH)_{d} (where X is at least one of F and Cl), a + 3 × b = c + d is satisfied, and 0 < b < 1, 0 < c < 6, and 0 < d < 6 are also satisfied if 2.7 < a < 3.3. When a is fixedly set to three, b becomes in the range of 0.43 to 0.75, c becomes in the range of 2.25 to 2.57, and d becomes in the range of 1.71 to 3 in Experimental Examples 2 to 8. If a tolerance of approximately 10% is applied to the above ranges of a to d, it is preferable that 2.7 < a < 3.3, 0.4 < b < 0.8, 2.0 < c < 2.8, and 1.5 < d < 3.3 are satisfied.

Meanwhile, it is inferred that Li can be replaced by other alkali-metallic elements, Al can be replaced by other metallic and/or metalloid elements (high ion conductivity was achieved in Experimental Example 9 in which Al was replaced by Ga), and F and Cl can also be replaced by other halogen elements. Therefore, the solid electrolyte can be expressed by a composition formula of MαₐMβ_{b}X_{c}(OH)_{d}, where Mα represents the first element group of one or more alkali-metallic elements selected from the group consisting of Li, Na, and K; Mβ represents the second element group of one or more elements selected from metallic elements and metalloid elements excluding Li, Na, and K; and X represents the third element group of one or more halogen elements selected from the group consisting of F, Cl, Br, and I, in which a, b, c, and d satisfy the above-described conditions.

However, it is known that high ion conductivity cannot be achieved when Mβ is Zr or Mg as shown in Experimental Examples 10 and 11. Therefore, it is preferable that these metallic elements are excluded from Mβ.

In Experimental Examples 12 and 13, the same treated powder as in Experimental Examples 2 and 5, respectively, was heated without pressurization after molding. This shows that applying pressure during heating is not an essential requirement for improving ion conductivity. A preferable range of pressure for pressurization also depends on the extent of the mechanochemical process, and therefore pressurization may be performed as appropriate within the range of higher than or equal to 1 MPa and lower than or equal to 500 MPa.

Furthermore, the heating temperature for the treated powder also depends on the extent of the mechanochemical process and therefore does not need to be high. Heating only needs to be performed at a temperature of higher than or equal to 40°C for a period of time longer than or equal to 30 minutes. It has been confirmed that high ion conductivity can be achieved even at low temperatures. Although there is no need to set an upper limit for the heating temperature, the heating temperature is, for example, lower than or equal to 300°C. There is also no need to set a specific upper limit for the heating time, and the heating time is, for example, shorter than or equal to 24 hours.

In Experimental Examples 15 to 17 and 22, another material (GaF₃, Al₂O₃, B₂O₃, or ZnF₂) was added to LiCl, AlF₃, and LiOH that were used as the raw materials in Experimental Example 14. Specifically, the metallic element Ga was added in Experimental Example 15, the metalloid element B was added in Experimental Example 17, and the metallic element Zn was added to Experimental Example 22. In Experimental Examples 18 to 21, another material (ZnF₄, MgF₃, Li₂SiF₆, or TiF₄) was added to LiF, LiCl, AlF₃, and LiOH that were used as the raw materials in Experimental Examples 2 and 4 to 8. Specifically, the metallic element Zr was added in Experimental Example 18, the metallic element Mg was added in Experimental Example 19, the metalloid element Si was added in Experimental Example 20, and the metallic element Ti was added in Experimental Example 21.

It becomes clear from Experimental Examples 15 to 22 that other metallic or metalloid elements may also be present as long as the second element group includes at least one or more elements serving as trivalent cations selected from metallic elements and metalloid elements. It is also preferable that an element of the second element group is at least one of Al and Ga.

The solid electrolyte according to Experimental Example 23 contained Cl, F, and Br as its halogen elements, and the solid electrolyte according to Experimental Example 24 contained F and Br as its halogen elements. It is shown from these experimental examples that the third element group is preferably one or more halogen elements selected from the group consisting of F, Cl, and Br, and it is inferred that the third element group is preferably at least one or more halogen elements selected from the group consisting of F, Cl, Br, and I.

It becomes clear from Experimental Examples 14 to 24 that, in general, the solid electrolyte containing Li, Al, F, and OH or the solid electrolyte containing Li, Al, F, Cl, and OH may contain Ga, an Al oxide, B, Zr, Mg, Si, Ti, Zn, and Br. Note that Experimental Examples 10 and 11 show that it is not preferable to contain a large amount of Zr or Mg. In general, among the metallic elements and the metalloid elements excluding alkali-metallic elements (the first element group), the elements included in the second element group constitute 50 mol% or more. It is clear from Experimental Examples 18 to 22 that, among the metallic elements and the metalloid elements excluding the alkali-metallic elements, the elements included in the second element group preferably constitute 80 mol% or more and more preferably constitute 90 mol% or more. In this case as well, a preferable second element group is Al.

The solid electrolyte according to Experimental Example 25 contained Na, instead of Li in Experimental Example 14. It is thus shown that the first element group is preferably one or more alkali-metallic elements selected from the group consisting of Li and Na and it is inferred that the first element group is preferably one or more alkali-metallic elements selected from the group consisting of Li, Na, and K.

In Experimental Examples 14 to 24 as well, the solid electrolytes are expressed by a composition formula of LiₐAl_{b}X_{c}(OH)_{d} (where X is at least one of F and Cl), in which a + 3 × b = c + d is satisfied, and 0 < b < 1, 0 < c < 6, and 0 < d < 6 are also satisfied if 2.7 < a < 3.3. The preferable ranges as described in Experimental Examples 2 to 8, i.e., 2.7 < a < 3.3, 0.4 < b < 0.8, 2.0 < c < 2.8, and 1.5 < d < 3.3, are also satisfied in Experimental Examples 14 to 24.

### Evaluation of Potential Window

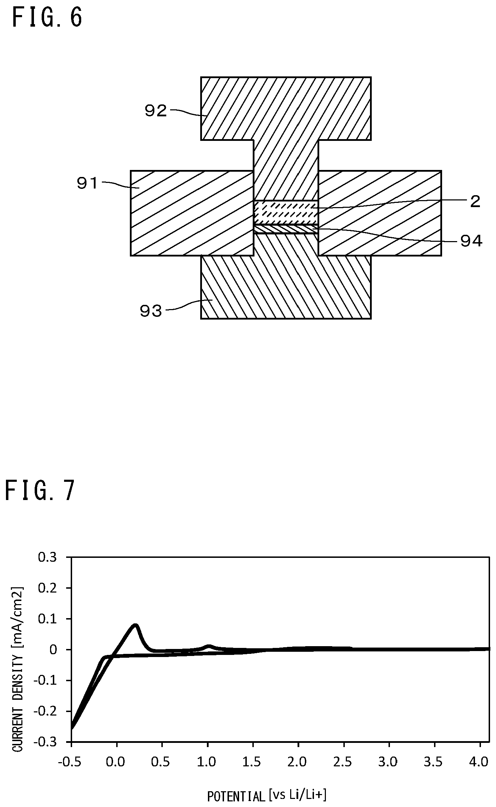

Next, the evaluation of a potential window for Experimental Example 2 is described. The treated powder obtained in Experimental Example 2 was placed between the upper and lower punches 92 and 93 made of SUS (stainless steel) in the resin sleeve 91 as shown in Fig. 3, and was press-molded by being pressurized to 150 MPa and heated to 150°C. Thereafter, the punch on one side was removed, and Li metal foil 94 with a diameter of 8 mm and a thickness of 0.2 mm was placed under the solid electrolyte 2 as shown in Fig. 6. Then, a cyclic voltammetry measurement was conducted via wiring connected to the upper and lower punches 92 and 93. The measurement conditions were as follows: a voltage range of + 4.1V to -0.5V and a sweep speed of 10 mV/sec.

Fig. 7 shows the result of the cyclic voltammetry measurement. The horizontal axis indicates the potential (from -0.5V to 4.0V (vs. Li/Li +)), and the vertical axis indicates the current density (from -0.3 mA/cm² to 0.3 mA/cm²). Oxidation-reduction current resulting from deposition and dissolution of Li was observed at around 0V, which suggested the presence of Li ion conduction Moreover, no other significant oxidation-reduction current other than that resulting from Li deposition and dissolution was observed over a wide voltage range of 0V to 4V, which suggested the presence of high oxidation-reduction resistance (i.e., a wide potential window).

### Raman Spectrum Measurement

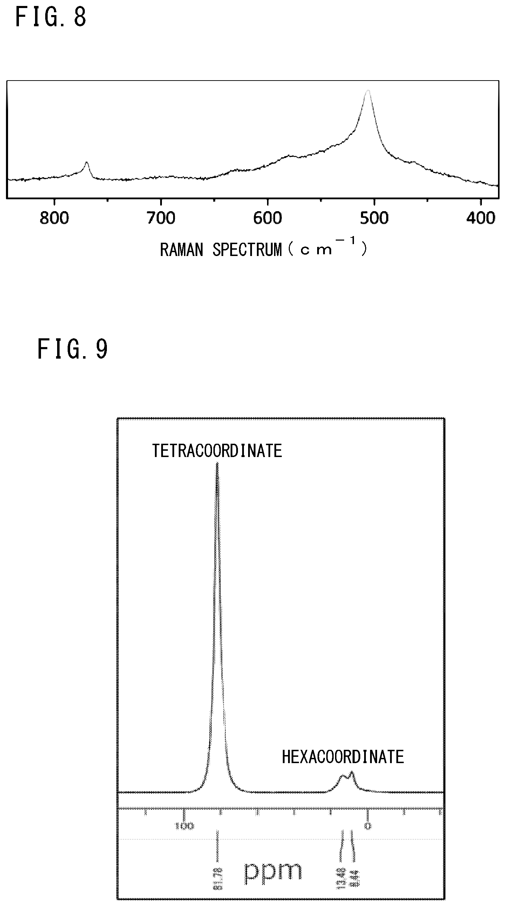

Next, the result of a Raman spectrum measurement conducted for Experimental Example 14 is described. Fig. 8 is a diagram showing a Raman spectrum acquired by the measurement. The measurement was conducted using "HR Evolution" (manufactured by HORIBA Jobin Yvon, Inc.) under the following conditions: a measurement mode of "microscopic Raman", a beam diameter of 2 µm, a light source of 532 nm (YAG laser, 2nd Harmonic), laser power of 25 mW, a diffraction grating of Single 1800 gr/mm, a slit of 100 µm, a cross-slit of 100 µm, and a detector (CCD (Symphony II)).

Since no outstanding peaks were observed in the XRD, the solid electrolyte appeared to be formed of near-amorphous materials, but it is clear from the Raman spectrum that the solid electrolyte had consistent structural uniformity. This structural uniformity was considered to be one of the factors contributing to high ion conductivity. It can be said from the conditions in Experimental Example 14 that, when the first element group includes Li and the second element group includes Al, the Raman spectrum has peaks in the range of higher than or equal to 470 cm⁻¹ and lower than or equal to 570 cm⁻¹ and in the range of higher than or equal to 720 cm⁻¹ and lower than or equal to 820 cm⁻¹.

### NMR Spectrum Measurement

Next, the result of a solid-state²⁷Al NMR (nuclear magnetic resonance) spectrum measurement conducted for Experimental Example 14 is described. Fig. 9 is a diagram showing an NMR spectrum acquired by the measurement. The measurement was conducted using "ECA 600" (manufactured by JOEL RESONANCE Inc.) under the following conditions: a measurement atmosphere of dry nitrogen, ambient temperature (up to 22°C), a chemical-shift reference of an aluminum nitrate solution (external reference of 0 ppm), an observation frequency for ²⁷Al of 156.38565 MHz, an observation width of 806 kHz, a pulse width of 30°, a pulse of 1 µs, a pulse cycle time: ACQTM = 10.158 ms and PD = 16 s, a data point: POINT = 16384 and SAMPO = 8192, a pulse mode of DD/MAS, and a sample rotation speed of 25 kHz.

The coordination number (chemical bonding state) of Al can be determined from the result of the solid-state NMR spectrum measurement, and in the case of Experimental Example 14, 94 mol% of Al, i.e., 90 mol% or more of Al, had a coordination number of 4. Therefore, it is conceivable that a high content of Al with a coordination number of 4 is one of the factors contributing to high ion conductivity, and preferably 60 mol% or more of Al has a coordination number of 4.

### Production of All-Solid-State Battery (1)

The treated powder in Experimental Example 2, Li(Ni,CO,Mn)O₂ powder serving as a positive active material, and carbon powder serving as a conductive additive were prepared. Then, the treated powder, the positive-active-material powder, and the conductive-additive powder were weighed and mixed in a weight ratio of 50:50:1 to obtain positive blended powder.

Then, 200g of the treated powder in Experimental Example 2 was placed into the PEEK resin sleeve 91 having a hole with an inner diameter of 10 mm as shown in Fig. 3, and was uniaxially pressed at 150 MPa by the upper and lower punches 92 and 93. The punch on one side was removed, and 30 mg of the positive blended powder was weighed and placed on the treated powder after pressing. Then, the positive blended powder and the treated powder were uniaxially pressed at 150 MPa and at 150°C by the upper and lower punches 92 and 93. After the temperature was returned to ambient temperature, the punch on the side opposite the positive electrode was removed, Li metal foil with a diameter of 8 mm and a thickness of 0.2 mm was placed on the solid electrolyte, and then the above punch was reinserted.

### Evaluation of All-Solid-State Battery (1)

A charge/discharge test of the all-solid-state battery was performed at ambient temperature via conductors connected to each of the pair of upper and lower metal punches as described below.

First, the all-solid-state battery was charged using a charge termination voltage of 4.0V, a CC charging current of 150 µA/cm², and a CV charging current of 30 µA/cm². Specifically, it was charged at a constant current (CC) of 150 µA/cm² until the voltage reached 4.0V, and then continued to be charged at a constant voltage (CV) until the current value reached 30 µA/cm².

Then, the charged all-solid-state battery was discharged using a discharge termination voltage of 2.1V, a CC discharging current of 150 µA/cm², and a CV discharging current of 30 µA/cm². Specifically, it was discharged at a constant current (CC) of 150 µA/cm² until the voltage reached 2.1V, and then continued to be discharged at a constant voltage (CV) until the current value reached 30µA/cm².

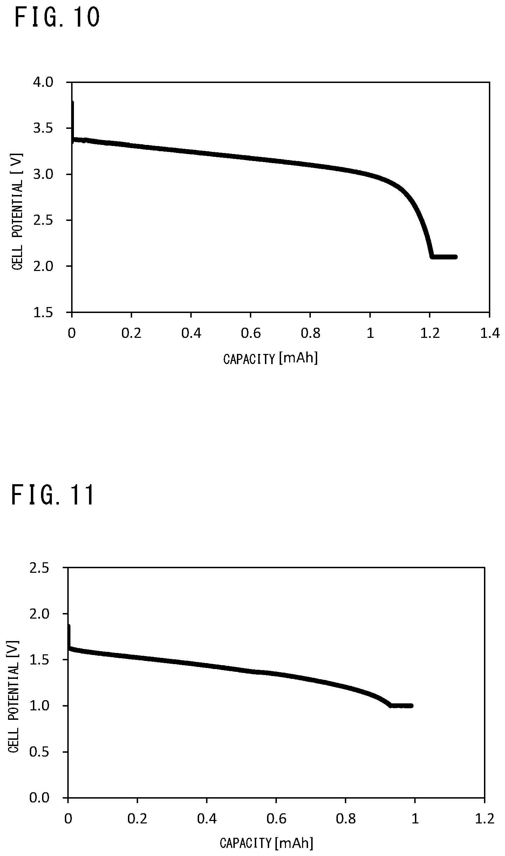

Fig. 10 shows an obtained discharge curve. The horizontal axis indicates the capacity (from 0 mAh to 1.4 mAh), and the vertical axis indicates the cell potential (from 1.5V to 4.0V). The discharge capacity was 1.3 mAh. This experiment shows that the solid electrolyte can be used as the solid electrolyte layer and the positive electrode layer in the all-solid-state battery.

### Production of All-Solid-State Battery (2)

The treated powder in Experimental Example 2, LiFePO₄ powder serving as a positive active material, Li₄Ti₅O₁₂ powder serving as a negative active material, and carbon powder serving as a conductive additive were prepared. The treated powder, the positive-active-material powder, and the conductive- additive powder were weighed and mixed in a weight ratio of 50:50:1 to obtain positive blended powder. The treated powder, the negative active material powder, and the conductive additive powder were also weighed and mixed in a weight ratio of 50:50:1 to obtain negative blended powder.

Then, 200 mg of the treated powder in Experimental Example 2 was placed into the PEEK resin sleeve 91 having a hole with an inside diameter of 10 mm as shown in Fig. 3, and was uniaxially pressed at 150 MPa by the upper and lower punches 92 and 93. The punch on one side was removed, and 30 mg of the aforementioned positive blended powder was weighed and placed on the treatment that had been pressed. Then, the positive blended powder and the treated powder were uniaxially pressed again at 150 MPa.

The punch on the side opposite the positive electrode was removed, and 30 mg of the aforementioned negative blended powder was weighed and placed on the treated powder that had been pressed. Then, the negative blended powder and the treated powder were uniaxially pressed at 150 MPa and at 150°C by the upper and lower punches 92 and 93. Thereafter, the temperature was returned to ambient temperature.

### Evaluation of All-Solid-State Battery (2)

A charge/discharge test of the all-solid-state battery was performed at ambient temperature via conductors connected to each of the pair of the upper and lower metal punches as described below.

First, the all-solid-state battery was charged using a charge termination voltage of 2.2V, a CC charging current of 150 µA/cm², and a CV charging current of 30 µA/cm². Specifically, it was charged at a constant current (CC) of 150 µA/cm² until the voltage reached 2.2V, and then continued to be charged at a constant voltage (CV) until the current value reached 30 µA/cm².

Then, the charged all-solid-state battery was discharged using a discharge termination voltage of 1.0V, a CC discharging current of 150 µA/cm², and a CV discharging current of 30 µA/cm². Specifically, it was discharged at a constant current (CC) of 150 µA/cm² until the voltage reached 1.0V, and then continued to be discharged at a constant voltage (CV) until the current value reached 30 µA/cm².

Fig. 11 shows an obtained discharge curve. The horizontal axis indicates the capacity (from 0 mAh to 1.2 mAh), and the vertical axis indicates the cell potential (from 0.0V to 2.5V). The discharge capacity was 1.0 mAh. This experiment shows that the solid electrolyte can be used as the solid electrolyte layer, the positive electrode layer, and the negative electrode layer in the all-solid-state battery.

The solid electrolyte, the method of producing the solid electrolyte, and the battery described above may be modified in various ways.

The solid electrolyte may contain impurities, and the substance expressed by the above composition formula of MαₐMβ_{b}X_{c}(OH)_{d} may be contained as a principal constituent. The principle constituent refers to a constituent with a highest mass ratio among the constituents contained in the solid electrolyte. The mass ratio of the principle constituent in the solid electrolyte is preferably higher than or equal to 80% by mass and more preferably higher than or equal to 90% by mass. The solid electrolyte may be mixed with other substances and used as an electrolyte material. The mass ratio of the above-described solid electrolyte in the electrolyte material is preferably higher than or equal to 50% by mass, more preferably higher than or equal to 60% by mass, and yet more preferably higher than or equal to 70% by mass.

The solid electrolyte layer 13 shown in Fig. 1 may include a substance other than the solid electrolyte described above. The solid electrolyte used in the all-solid-state secondary battery 1 does not necessarily have to be included in all of the positive electrode 11, the negative electrode 12, and the solid electrolyte layer 13, and may be included in at least one of the positive electrode 11, the negative electrode 12, and the solid electrolyte layer 13. The solid electrolyte may be used in batteries other than all-solid-state secondary batteries, and may also be used for purposes other than batteries. In the production of the above-described solid electrolyte, mechanochemical processes other than a mechanical milling process may be performed.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all-solid-state secondary battery
- 2: solid electrolyte
- 11: positive electrode
- 12: negative electrode
- 13: solid electrolyte layer
- S11 to S14: step

## Claims

1. A solid electrolyte comprising:
a first element group of one or more alkali-metal elements selected from a group consisting of Li, Na, and K;
a second element group of one or more elements serving as trivalent cations selected from metallic elements and metalloid elements;
a third element group of one or more halogen elements selected from a group consisting of F, Cl, Br, and I; and
a hydroxyl group.

2. The solid electrolyte according to claim 1, wherein
said second element group includes Al or Ga.

3. The solid electrolyte according to claim 1, wherein
among the metallic elements and the metalloid elements excluding alkali-metal elements, the elements included in said second element group constitute 50 mol% or more.

4. The solid electrolyte according to claim 2, wherein
said second element group includes Al.

5. The solid electrolyte according to claim 1, wherein
said third element group includes F or Cl.

6. The solid electrolyte according to claim 1, being expressed by a composition formula of:
MαₐMβ_{b}X_{c}(OH)_{d},
where Mα represents said first element group, Mβ represents said second element group, and X represents said third element group,
wherein $a + 3 \times b = c + d ,$ $2.7 < a < 3.3 ,$ $0 < b < 1 ,$ $0 < c < 6 ,$ and $0 < d < 6$ are satisfied.

7. The solid electrolyte according to claim 1, wherein
a diffraction pattern obtained in measurement by an X-ray diffractometer using a CuKα ray has a peak in each of ranges of 2θ from 21° to 24°, from 32° to 34°, and from 35.5° to 37.5°.

8. The solid electrolyte according to claim 4, wherein
a diffraction pattern obtained in measurement by an X-ray diffractometer using a CuKα ray does not have a peak in a range of 20 from 24° to 26°.

9. The solid electrolyte according to claim 4, wherein
said first element group includes Li, and
in a Raman spectrum, a peak appears in a range of higher than or equal to 470 cm⁻¹ and lower than or equal to 570 cm⁻¹ and in a range of higher than or equal to 720 cm⁻¹ and lower than or equal to 820 cm⁻¹.

10. The solid electrolyte according to claim 4, wherein
60 mol% or more of Al has a coordination number of 4.

11. A battery comprising:
a positive electrode;
a negative electrode; and
a solid electrolyte layer provided between said positive electrode and said negative electrode,
wherein at least one of said positive electrode, said negative electrode, or said solid electrolyte layer includes the solid electrolyte according to any one of claims 1 to 10.

12. A method of producing a solid electrolyte, comprising:
a) preparing a first material that is a compound of an element group of one or more elements serving as trivalent cations selected from metallic elements and metalloid elements with an element group of one or more halogen elements selected from a group consisting of F, Cl, Br, and I;
b) preparing a second material that is a hydroxide of an element group of one or more alkali-metal elements selected from a group consisting of Li, Na, and K;
c) subjecting a mixture that contains said first material and said second material to a mechanochemical process; and
d) obtaining a solid electrolyte by heating said mixture that has undergone the mechanochemical process at a temperature of higher than or equal to 40°C for a period of time longer than or equal to 30 minutes and shorter than or equal to 24 hours.

13. The method of producing a solid electrolyte according to claim 12, further comprising:
before said operation c),
e) preparing a third material that is a compound of an element group of one or more alkali-metal elements selected from a group consisting of Li, Na, and K with an element group of one or more halogen elements selected from a group consisting of F, Cl, Br, and I,
wherein, in said operation c), a mixture that contains said first material, said second material, and said third material is subjected to a mechanochemical process.

14. The method of producing a solid electrolyte according to claim 12 or 13, wherein
in said operation d), said mixture that has undergone the mechanochemical process is pressurized to a pressure of higher than or equal to 1 MPa and lower than or equal to 500 MPa.
